(19) Europäisches Patentamt
European Patent Office
Office européen des brevets

(11) EP 2 048 640 A2

(12) **EUROPEAN PATENT APPLICATION**

(43) Date of publication:
**15.04.2009 Bulletin 2009/16**

(51) Int Cl.:
***G09B 9/00*** *(2006.01)*

(21) Application number: **08158725.5**

(22) Date of filing: **23.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.10.2007 EP 07118418**

(71) Applicant: **Gruentjens, Norbert**
**78655 Dunningen (DE)**

(72) Inventors:
- **Borchers, Marc**
**72072 Tübingen (DE)**
- **Hans Torsten**
**72074 Tübingen (DE)**

(74) Representative: **Charles, Glyndwr**
**Reinhard, Skuhra, Weise & Partner GbR**
**Patent- und Rechtsanwälte**
**Friedrichstrasse 31**
**80801 München (DE)**

(54) **A method and an apparatus for controlling a simulated moving object**

(57) A method and an apparatus for controlling a simulated moving object, wherein during a simulated movement of said object within a three-dimensional virtual world, a switching between different reference points (RP) is performed,
wherein said three-dimensional virtual world is generated on the basis of multiple aligned panoramic images (PI) each formed by a set of pictures taken at one of said reference points (RP).

FIG 5

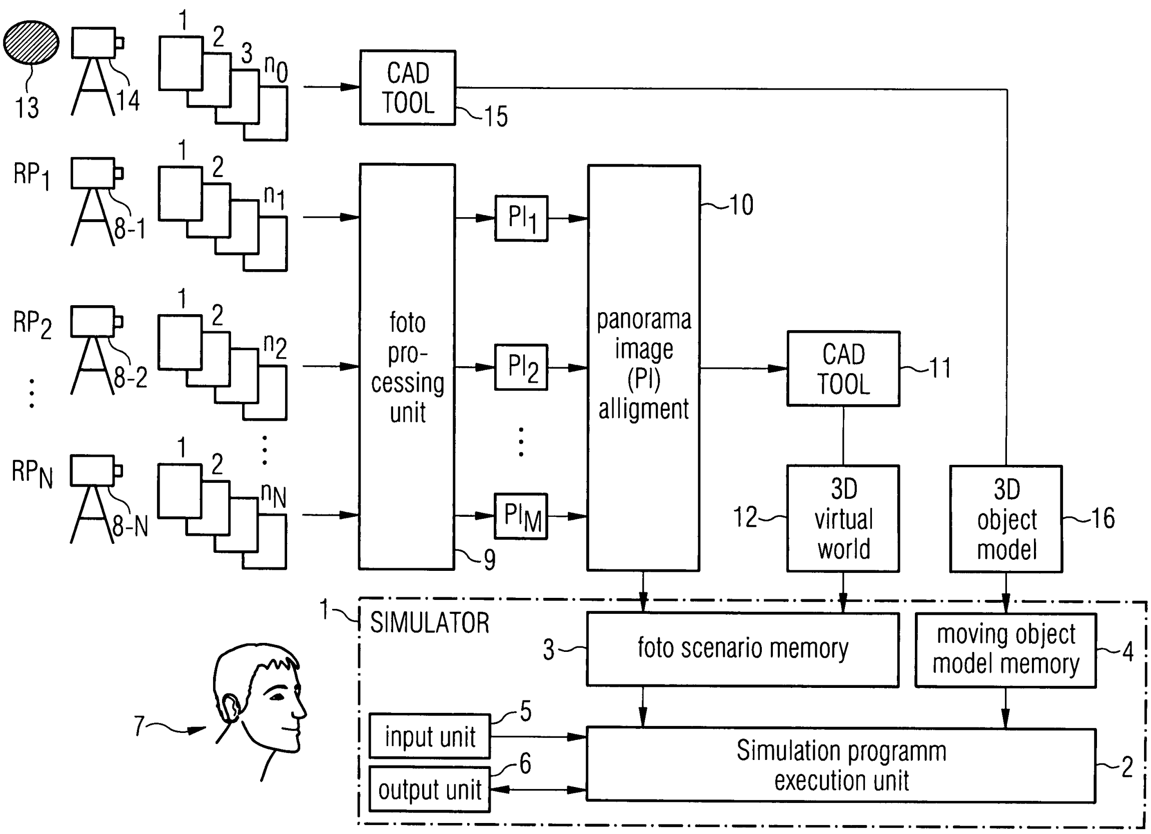


EP 2 048 640 A2

## Description

The invention relates to a method and an apparatus for controlling a simulated moving object and in particular for controlling a flying object moving in a three-dimensional virtual world such as a helicopter or an aircraft.

A flight simulator is a training device that simulates flying an aircraft or a helicopter. There are different types of flight simulators which range from video games up to cockpit replicas mounted on hydraulic or electromechanic actuators.

Besides aircrafts and helicopters there are radio-controlled vehicles such as radio-controlled helicopters or radio-controlled airplanes which are controlled by a remote handheld control device via an air link. However, controlling such a radio-controlled flying object takes skill and practice. Accordingly, there are flight simulators to practice maneuvering of radio-controlled flying objects such as aircrafts and helicopters.

To create a photorealistic impression on a user to be trained conventional flight simulators use panoramic images of a three-dimensional terrain to create a virtual world. A panoramic image is taken from the viewpoint of a user on the ground and can cover 360° horizontally and 180° vertically. The panoramic images are used as a background in front of which the flying object is mapped onto the terrain.

Using a panoramic image to create a virtual world in conventional flight simulators inherently limits the position of the user to be trained to just one fixed location. This limits the user's ability to precisely control the flying object at larger distances as the size of the flying object on the screen of the flight simulator gets smaller with larger distances. Furthermore, a distance perception and position estimation of the aircraft with respect to the ground is diminished with larger distances. For example, it is almost impossible for a user to precisely land a flying object such as an aircraft in a simulation using the conventional technique if the runway on which the aircraft is to be landed is more than 500 meters away from the location of the user, i.e. the location where the panoramic image was taken. For example, it is very hard for a user to judge whether the aircraft which he controls to land on the runway is at a distance of e.g. 500 meters or at 520 meters. A small difference of e.g. just 20 meters can cause that the user controlled moving object misses the runway altogether. The same applies to all situations where the user or pilot must have a precise position estimation of the flying object with respect to ground features or other features in the virtual three-dimensional world. Examples for this kind of situations include landing maneuvers on another end of a longer runway, flying close to obstacles in the three-dimensional world and pattern flying.

Accordingly, it is an object of the present invention to provide a method and an apparatus which overcome the limitations of conventional flight simulators and which allow a more precise control of a flying object in a three dimensional world by a user.

The present invention provides a method for controlling a simulated moving object, wherein during a simulated movement of said object within a three-dimensional virtual world a switching between different reference points is performed, wherein said three-dimensional virtual world is generated on the basis of multiple aligned panoramic images each formed by a set of pictures taken at one of said reference points.

In an embodiment of the present invention each panoramic image covers 360 degrees horizontally and at least 180 degrees vertically around a reference point.

In an embodiment of the present invention each panoramic image is formed by assembling overlapping pictures taken by a camera located at a reference point.

In an embodiment of the present invention for at least one selectable fixed landmark visible on all generated panoramic images a corresponding landmark marker is provided on said panoramic image.

In an embodiment of the present invention positions and orientations of the panoramic images are aligned to each other with respect to said fixed landmark.

In an embodiment of the present invention distances between reference points and distances between reference points and said landmark are measured.

In an embodiment of the present invention distances between landmark lines each defined by a reference point and a landmark marker provided on a panoramic image for the respective landmark are minimized to align the positions and the orientations of the panoramic images to each other with respect to said landmark.

In an embodiment of the present invention on the basis of the panoramic images aligned to each other with respect to said at least one landmark said three-dimensional virtual world is generated and stored together with the panoramic images as a photo scenario in a memory.

In an embodiment of the present invention a three-dimensional model of said moving object is generated on the basis of pictures of said object taken by a camera and stored in a memory.

In an embodiment of the present invention during the simulated movement of said object within the three-dimensional virtual world the user switches between different reference points to change a viewer position of said user.

In an embodiment of the present invention during the simulated movement of said object within the three-dimensional virtual world a switching between different reference points is performed continuously to reference points being located closest to a current position of said object.

The invention further provides a computer program for performing a method for controlling a simulated moving object, wherein during a simulated movement of said object within a three-dimensional virtual world a switching between different reference points is performed, wherein said three-dimensional virtual word is generated on the basis of multiple aligned panoramic images each formed by a set of pictures taken at one of said reference points.

The invention further provides an apparatus for controlling a simulated moving object, comprising an execution unit for execution of a computer program for controlling a simulated moving object, wherein during a simulated movement of said object within a three-dimensional virtual world, a switching between different reference points is performed, wherein said three-dimensional virtual world is generated on the basis of multiple aligned panoramic images each formed by a set of pictures taken at one of said reference points.

In an embodiment of the apparatus according to the present invention the apparatus comprises an input unit for inputting control commands by a user to control the simulated movement of said object within the three-dimensional virtual world and an output unit for displaying the simulated movement of said object within the three-dimensional virtual world, wherein a virtual background is displayed according to the corresponding photo scenario.

In an embodiment of the apparatus according to the present invention said switching between different reference points is performed automatically or in response to switching commands input by a user into said input unit.

The invention further provides a data carrier which stores a computer program which controls a simulated moving object, wherein during a simulated movement of said object within a three-dimensional virtual world a switching between different reference points is performed wherein said three-dimensional virtual world is generated on the basis of multiple aligned panoramic images each formed by a set of pictures taken at one of said reference points.

In the following, preferred embodiments of the method and apparatus according to the present invention are described with reference to the enclosed figures.

Fig. 1 illustrates the generation of a panoramic image formed by a set of pictures taken at different reference points;

Fig. 2 shows an example of generated panoramic image as employed by the method and apparatus according to the present invention;

Fig. 3 shows a diagram for illustrating the alignment of panoramic images by means of a landmark as employed by the method and apparatus according to the present invention;

Fig. 4 shows a block diagram of a possible embodiment of an apparatus for controlling a simulated moving object according to the present invention;

Fig. 5 shows a block diagram of a system for generating a photo scenario and a three-dimensional model of a moving object as employed by a flight simulator according to the present invention;

Fig. 6 shows a flow diagram of an algorithm as employed by the method and apparatus according to the present invention;

Fig. 7 shows a diagram for illustrating the alignment of panoramic images as employed by the method an apparatus according to the present invention;

Fig. 8 shows a further diagram for illustrating the alignment of panoramic images as employed by the method and apparatus according to the present invention;

Fig. 9 shows an example of a flight maneuver controlled by the method and apparatus according to the present invention;

Fig. 10 illustrates a difficulty of controlling a flying object with a conventional flight simulator;

Fig. 11 shows a displayed flying object during a landing maneuver to illustrate a more precise control as provided by the method and apparatus according to the present invention;

Fig. 12 shows a further displayed flying object during a landing maneuver for illustrating a more precise control as provided by the method and apparatus according to the present invention;

Fig. 13 illustrates a further example or improved control of a simulated moving object as provided by the method and apparatus according to the present invention;

Fig. 14 illustrates the generation of a three-dimensional virtual world by using two different reference points according to the present invention;

Figs. 15A, 15B illustrate the generation of a three-dimensional virtual world seen from a reference point;

Figs. 16A, 16B illustrate the generation of a three-dimensional virtual world seen from another reference point.

Fig. 1 illustrates the generation of a three-dimensional virtual world on the basis of multiple aligned panoramic images as employed by the method and apparatus according to the present invention. The panoramic images are formed by pictures taken at reference points RP. In the example shown in Fig. 1 pictures are taken by means of a camera at reference points $RP_i$, $RP_{i+1}$. At each reference point RP several pictures are taken. For example, the camera is turned around an axis and a picture is taken every 5°. In the example shown in Fig. 1 the camera is turned horizontally in a x-plane. The camera can also be inclined vertically around a reference point RP in a range of at least 180°. In a possible embodiment each panoramic image covers 360° horizontally, i.e. in the x-plane and at least 160° vertically around a reference point RP. In the example shown in Fig. 1 two panoramic images PI are generated at two reference points $RP_i$, $RP_{i+1}$.

Fig. 2 shows an example of such a panoramic image PI formed by a set of pictures taken at a reference point RP. This panoramic image PI is formed by assembling overlapping pictures taken by a camera located at a respective reference point RP. On the panoramic image PI a landmark is visible. Such a landmark can be formed for example by a point of interest such as a traffic sign, a tree or a mountain top. In the given example of Fig. 2 the landmark is formed by a flight training ground indication shield. Other possible landmarks in the panoramic image of Fig. 2 are the trunks of trees or the top of the highest mountain in the panoramic image.

Fig. 3 shows a diagram illustrating a landmark L seen from two different reference points RP. This landmark L is located at a radius $r_i$ of a reference point $RP_i$ and at a radius $r_{i+1}$ of another reference point $RP_{i+1}$. The two reference points $RP_i$, $RP_{i+1}$ are spaced apart from each other at a distance D. The distances D between all reference points RP and the distances r between the reference points RP and the respective landmarks L are measured. In a possible embodiment these distances are measured by means of a GPS (global positioning system)-device. For at least one selectable fixed landmark L visible on all generated panoramic images PI a corresponding landmark marker M is provided on the respective panoramic images PI. In a possible embodiment the positions and orientations of the panoramic images PI are aligned to each other with respect to the fixed landmark L. In a possible embodiment the distances d between landmark lines each defined by a reference point RP and a landmark marker provided on a panoramic image PI for the respective landmark L are minimized to align the positions and the orientations of the panoramic images PI to each other with respect to the landmark L. On the basis of the aligned panoramic images PI a three-dimensional virtual world is generated and stored together with the panoramic images PI as a photo scenario in a memory.

Fig. 4 shows a block diagram of an apparatus for controlling a simulated moving object according to an embodiment of the present invention. The apparatus 1 comprises an execution unit or calculation unit 2 which in a possible embodiment executes a computer program stored in a computer program memory. In a possible embodiment the computer program is loaded from a data carrier storing said computer program. In an embodiment the execution unit 2 comprises at least one microprocessor. The execution unit 2 is connected to a photo scenario memory 3 and a moving object model memory 4. In the photo scenario memory 3 a three-dimensional virtual world model is stored together with the panoramic images PI as a photo scenario. In the moving object model memory 4 a three-dimensional model of a moving object is stored wherein this three-dimensional model is generated on the basis of pictures of a real object taken by a camera. For example, pictures are taken of a moving object such as an aircraft or a car and a three-dimensional object model is created by means of a computer aided design (CAD)-tool program. This three-dimensional model of the object is then stored in the memory 4. The apparatus 1 as shown in Fig. 4 further comprises an input unit 5 for inputting control commands by a user to control a simulated movement of the moving object within the three-dimensional virtual world stored in the memory 3. This input unit 5 can comprise a keyboard, a mouse or a joystick.

The apparatus 1 according to the present invention as shown in Fig. 4 further comprises an output unit 6 for displaying the simulated movement of the object within the three-dimensional world. The output unit 6 can be a display wherein a virtual background is displayed according to the photo scenario stored in the memory 3. In a possible embodiment a switching between different reference points RP is performed in response to switching commands input by a user into said input unit 5. In an alternative embodiment the switching is performed automatically between reference points RP provided along a route selectable by a user. In a possible embodiment a switching between reference points RP is performed in real time. The coordinates of the reference points RP and landmarks L as well as the coordinates of the landmark markers M can also be stored in the photo scenario memory 3. The moving object performs a movement in at least one dimension of the three-dimensional virtual world stored in the memory 3. In a possible embodiment the moving object is formed by a helicopter or an aircraft moving in three dimensions of said virtual world.

Fig. 5 shows a further block diagram for illustrating a system according to the present invention. In the embodiment shown in Fig. 5 the apparatus 1 is formed by a flight simulator comprising a simulation program execution unit 2, a photo scenario memory 3, a moving object model memory 4 as well as an input and output unit 5, 6. The input 5 and the output unit 6 form a user interface for a user to be trained. The user can be for example a person owning a radio-controlled helicopter or a radio-controlled airplane who wishes to improve his skills of controlling such a vehicle without risking its destruction in an unsuccessful flying maneuver. The user 7 shown in Fig. 5 sees on the display 6 the simulated movement of the flying object within the three-dimensional virtual world and can input control commands to control the simulated movement through the user interface, i.e. by inputting commands into said input unit 5. When controlling the simulated movement of the object the user has the possibility to switch between different reference points RP to control the movement of the flying object more precisely. To this end a three-dimensional virtual world is generated on the basis of multiple aligned panoramic images PI each formed by a set of pictures taken at one reference point RP. As shown in Fig. 5 to generate such a photo scenario stored in the memory 3 of the flight simulator 1 a camera 8 is positioned in a real environment for example at a flight training ground used by users of radio-controlled vehicles. As can be seen in Fig. 5, N cameras 8-1, 8-2,..., 8-N are set up each taking several pictures of the surrounding.

In the example shown in Fig. 1 two cameras are used. The photo processing unit 9 performs an assembly of the taken pictures to generate panoramic images PI. In a possible embodiment the panoramic images are formed by assembling overlapping pictures each taken by a respective camera 8 located at a reference point RP. In the example shown in Fig. 5 the photo processing unit 9 generates M panoramic images which are applied to a panoramic image alignment unit 10. The panoramic image alignment unit 10 aligns the panoramic images PI with respect to at least one fixed landmark L visible on all generated panoramic images PI. The positions and orientations of the panoramic images PI are aligned to each other with respect to a fixed landmark L such as the sign shown in Fig. 1. By means of a computer aided design tool 11 the three-dimensional virtual world is generated on the basis of the multiple aligned panoramic images PI and stored in a three-D virtual world memory 12. The three-dimensional virtual world is stored together with the panoramic images PI in the photo scenario memory 3 of the flight simulation apparatus 1 as shown in Fig. 5.

Furthermore, pictures are taken of a moving object 13 to be simulated by means of at least one further camera 14. For example, pictures of a real aircraft or a real helicopter are taken by means of the camera 13. The three-dimensional object model of this object is generated by means of a CAD-tool 15. This three-dimensional object model 16 is stored in the moving object model memory 4 of the flight simulation apparatus 1 as shown in Fig. 5.

During the flight simulation a user 7 as shown in Fig. 5 can switch between different reference points RP in the three-dimensional virtual world for better control of the moving object. This virtual world is formed by combining panoramic images PI taken from several positions or reference points RP in the terrain as well as object information to form the virtual world. The user 7 which can be a person controlling a video-controlled vehicle or a pilot training his skills can switch between the different positions RP instantaneously while flying. This allows the user 7 to select a viewer position according to the current task. For example, during a landing maneuver for landing a flying object on a runway the user 7 can switch his viewer position to a reference point RP close to the beginning of the runway. This simplifies his task of judging small differences of e.g. 20 meters at a long distance of e.g. 500 meters to judging the same difference of e.g. 20 meters only several meters away from his selected viewer position. This allows for a more precise control of the flying object.

The switching between different reference points RP or viewer positions is possible by performing a multi-panorama image fitting to generate a three-dimensional virtual world on the basis of multiple aligned panoramic images PI each formed by a set of pictures taken at one of said reference points by a camera. To create this three-dimensional virtual world points of interest or landmarks L are used in the terrain or surrounding such as house corners, flag masts or a sign such as shown in Fig. 1. These landmarks L can be seen from different reference points RP. After generation of the panoramic image PI by overlapping the taken pictures the landmark L is marked in each panoramic image.

Fig. 7 shows two reference points RPA, RPB, each having two landmark markers M for respective landmarks L. Each landmark marker M comprises a pair of angles such as a heading and an elevation angle when projecting said panoramic image on a sphere. Each landmark marker M defines a ray which extends from the reference point RP, i.e. the camera position, under a heading and an elevation angle. The positions and orientations of the panoramic images PI are aligned to each other with respect to the fixed landmark L. To this end distances d between landmark lines 1 each defined by a reference point RP and a landmark marker M provided on a panoramic image PI with respect to a landmark L are minimized to align the positions and the orientations of the panoramic images PI to each other with respect to said landmark L. As shown for example in Fig. 7 the distances d1, d2 between landmark lines or rays r are minimized. For each pair of rays or landmark lines an error or deviation can be calculated. In a possible embodiment, this error is calculated by the distances of the two rays r divided by the distance d from the first reference point RPA and the distance of these rays divided by the distance to the other reference point RPB:

$$E_I^2 = \sum_i d_I^2 \left( \frac{1}{r_{A_i}^2} + \frac{1}{r_{B_i}^2} \right) \qquad (1)$$

By multiplying such a dimensionless error E with a factor such as display format in pixel divided by 2n one gets a direct information about the deviation of this control point or marker in pixel to be seen later on the display. A good matching or fit is given when the average deviation is reduced such that it is lower than one pixel. In a possible embodiment an estimation of an error of first order as indicated in equation (1) is performed.

In a possible embodiment an even better matching can be achieved by minimizing the deviations according to an error of second order as illustrated by Fig. 8. This is especially helpful when all reference points RP are located almost on the same plane. In this embodiment, quadratic errors of a triple of rays r is summed up. The area which is enclosed by the three rays r or landmark lines 1 shown in Fig. 8 is divided by the sum of the squares of the distances of the center of the area to the reference points RP:

$$E_2^2 = \sum_i \frac{F_i}{r_{A_i}^2 + r_{B_i}^2 + r_{C_i}^2} \qquad (2)$$

Fig. 6 shows a flow chart of an algorithm for optimizing a multi-panorama image matching. After a step S0 an initialization of the calculation error is performed in step S1. Furthermore, a target error is set in step S1, i.e. an upper limit or threshold value for the acceptable error is set.

In a further step S2 the positions, angles and offsets of each panoramic image PI are randomized.

In a further step S3 rays from control point markers and positions, angles and offsets are set up, i.e. all rays or landmark lines are calculated.

In a further step S4 the errors from the rays or landmark lines are calculated and summed up.

In a further step S5 it is decided whether the actual error is smaller than the last error during the previous iteration. If the error has not decreased the process returns to step S2. Otherwise, the calculated error is stored as the last error in step S6.

Then it is decided in step S7 whether the error is smaller than the target error, i.e. smaller than the acceptable error range. If the error is smaller than the target error, the process stops in step S8. Otherwise, the process returns to step S2.

Different parameters can be varied to minimize the error. First, the position of each photo image sphere can be changed.

Furthermore, a turn angle of a photo sphere can be varied. Finally, an offset between a photo sphere and a camera position can be changed to compensate possible distortions.

The final positions, angles and offsets are memorized in the three-dimensional design software model. Together with the measured positions and dimensions of the object they are stored as a photo scenario in the photo scenario memory 3 of the apparatus 1 according to the present invention.

Fig. 9 shows an example of a flying maneuver for illustrating the method according to the present invention. In the given example, the three-dimensional object model 16 of a flying object such as an aircraft is landed under the control of a user on a runway of an airport. In the given example the user can switch his viewer position between different reference points RP along the runway. In the given example several reference points RP1R top RP8R are located on the right side of the runway and several reference points RP1L to RP8L are located on the left side of the runway. When controlling the landing maneuver the user can switch to the beginning of the runway, e.g. to reference point RP8R or RP8L and start descending of the flying object 16. Then the user can switch to other reference points RP along the runway during the landing of the flying object to perform a precise control of the landing maneuver.

Fig. 10 illustrates a simulated landing of an aircraft on a runway by a conventional simulator. As can be seen in Fig. 10 the landing of the aircraft at a distant end of the runway is almost impossible to be controlled by the user because the viewer position is located too far away from the landing ground.

Fig. 11 illustrates control of landing a flying object according to the present invention. In this example the user switches to a reference point RP close to the beginning of the runway such as reference point RP8L. After switching to this viewer position the user is much closer to the landing ground and can perform the landing of the flying object more easily and precisely. Consequently the user can react correctly if the flying object is in danger of missing the runway shown in Fig. 12.

Fig. 13 shows a further exemplary embodiment or method and an apparatus according to the present invention. In this embodiment, the moving object is not formed by a flying object but by racing cars in a racing competition. In the embodiment the user can switch between different reference points RP along the race course. Whereas a user which controls a racing car Y as a moving object and who has switched to a reference point RPA does only see his car from a distance, he can switch to another reference point, i.e. reference point RPB, to be much closer to his car. Further it is easier for him to control the movement of the car Y along a narrow curve.

Fig. 14 illustrates an example for the generation of a three-dimensional virtual world as employed by a method and an apparatus according to the present invention. In the given example two cameras 8-1, 8-2 are positioned in the terrain to take pictures of a flight training ground from two different sides.

Figs. 15A, 15B as well as Figs. 16A, 16B show opposing panoramic images taken by the cameras 8-1, 8-2 wherein a three-dimensional virtual world is superimposed to the panoramic images in a photo scenario.

In the embodiment described so far, a user such as user 7 as shown in Fig. 5 switches between different reference points to change his viewer position in the three-dimensional world during a simulated movement of the object by inputting control commands via a user interface such as an input unit 5.

In an alternative embodiment a switching between different reference points RP is performed continuously to reference points being located closest to a current position of said object. In a possible embodiment, multiple reference points RP are provided along a route selectable by the user. In this embodiment, the user 7 selects a route in the three-dimensional virtual world and reference points are provided along the selected route. Then the switching between the different reference points RP is performed automatically to those reference points located closest to the current position.

Providing panoramic images PI taken from many reference points RP allows even a cross-country flying by continuously switching to the panoramic image position that is closest to the aircraft's position. For continuous switching the distance D between reference points RP as shown in Fig. 3 is minimized.

By using the method according to the present invention it is even possible to switch to reference points RP to make a moving object visible which cannot be seen from other reference points. For example, it is possible to switch from a reference point in front of a house to a reference point on the back side of a house. Accordingly, it is possible to control a simulated movement of an object which is hidden by another bigger object such as a house, a mountain or a tree. For example, it is possible to control the simulated movement of an aircraft or a helicopter flying behind an obstacle such as a mountain top. Reference points RP on an airport can include but are not limited to both ends and the center of several runways, a control tower, obstacles and positions on approach and departure routes.

In a possible embodiment switching between different reference points RP with minimum latency is achieved by transferring all image data to a graphic card before running the simulation. Switching between the reference points RP can be performed in real time.

The method and apparatus according to the present invention can be used for controlling any kind of simulated moving object such as a flying object, in particular a helicopter or an aircraft. In some embodiments, the method and apparatus can be used for controlling the simulated movement of aircrafts, racing cars, trains or ships in a virtual environment. The method and apparatus according to the present invention can be used to train private persons owning radio-controlled devices but also professionals such as pilots, engine drivers or ship captains.

## Claims

1. A method for controlling a simulated moving object, **wherein** during a simulated movement of said object within a three-dimensional virtual world, a switching between different reference points (RP) is performed,
wherein said three-dimensional virtual world is generated on the basis of multiple aligned panoramic images (PI) each formed by a set of pictures taken at one of said reference points (RP).

2. The method according to claim 1,
**wherein** each panoramic image (PI) covers 360 degrees horizontally and at least 180 degrees vertically around a reference point (RP).

3. The method according to claim 1 or 2,
**wherein** each panoramic image (PI) is formed by assembling overlapping pictures taken by a camera (8) located at said reference point (RP).

4. The method according to claim 1,
**wherein** for at least one selectable fixed landmark (L) visible on all generated panoramic images (PI) a corresponding landmark marker (M) is provided on said panoramic image (PI).

5. The method according to claim 4,
**wherein** positions and orientations of the panoramic images (PI) are aligned to each other with respect to said fixed landmark (L).

6. The method according to claim 5,
**wherein** distances (D) between reference points (RP) and distances (r) between reference points (RP) and said landmark (L) are measured.

7. The method according to claim 4,
**wherein** distances (d) between landmark lines (1) each defined by a reference point (RP) and a landmark marker (M) provided on a panoramic image (PI) for the respective landmark (L) are minimized to align the positions and the orientations of the panoramic images (PI) to each other with respect to said landmark (L).

8. The method according to claim 7,
**wherein** on the basis of the panoramic images (PI) aligned to each other with respect to said at least one landmark (L) said three-dimensional virtual world (12) is generated and stored together with the panoramic images (PI) as a photo scenario in a memory (3).

9. The method according to claim 1,
**wherein** a three-dimensional model (16) of said moving object is generated on the basis of pictures of said object taken by a camera (14) and stored in a memory (4).

**10.** The method according to claim 1, **wherein** during the simulated movement of said object within the three-dimensional virtual world the user switches between different reference points (RP) to change a viewer position of said user.

**11.** The method according to claim 1, **wherein** during the simulated movement of said object within the three-dimensional virtual world a switching between different reference points (RP) is performed continuously to reference points (RP) being located closest to a current position of said object.

**12.** A computer program for performing the method according to claims 1 to 11.

**13.** An apparatus for controlling a simulated moving object, comprising an execution unit (2) for execution of a computer program according to claim 12.

**14.** An apparatus according to claim 13, further comprising an input unit (5) for inputting control commands by a user (7) to control the simulated movement of said object within the three-dimensional virtual world and an output unit (6) for displaying the simulated movement of said object within the three-dimensional virtual world, wherein a virtual background is displayed according to the corresponding photo scenario.

**15.** An apparatus according to claim 14, **wherein** said switching between different reference points (RP) is performed automatically or in response to switching commands input by a user (7) into said input unit (5).

FIG 1

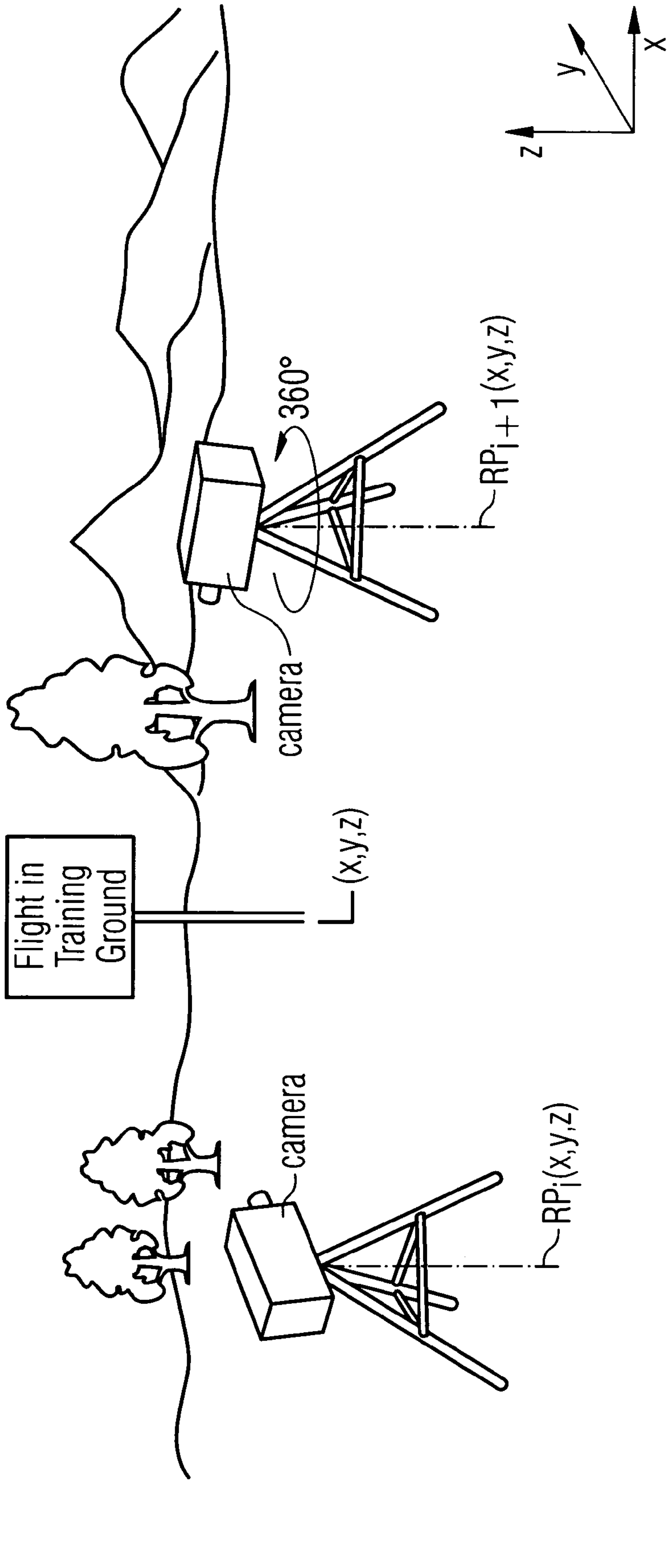
Flight in
Training
Ground
(x,y,z)
camera
camera
360°
$RP_{i+1}(x,y,z)$
$RP_i(x,y,z)$
x
y
z

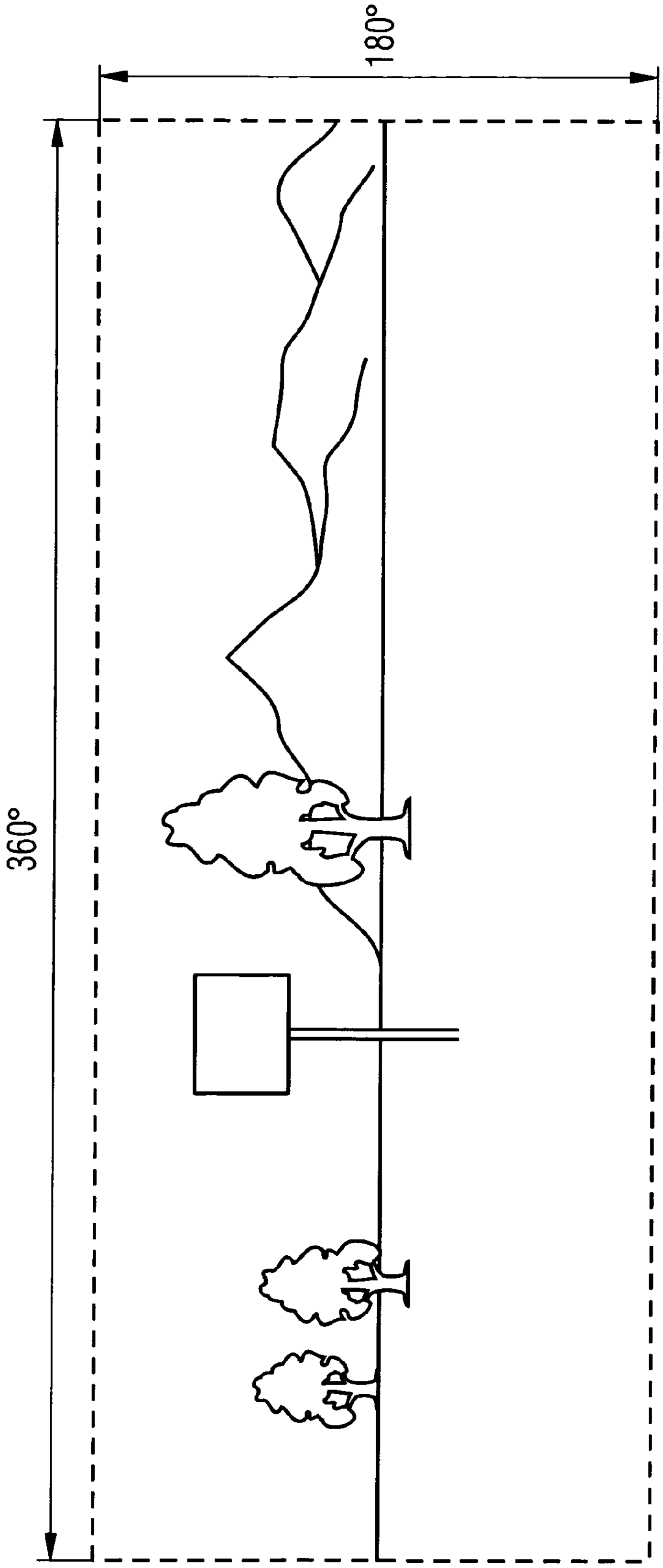


FIG 2

FIG 3

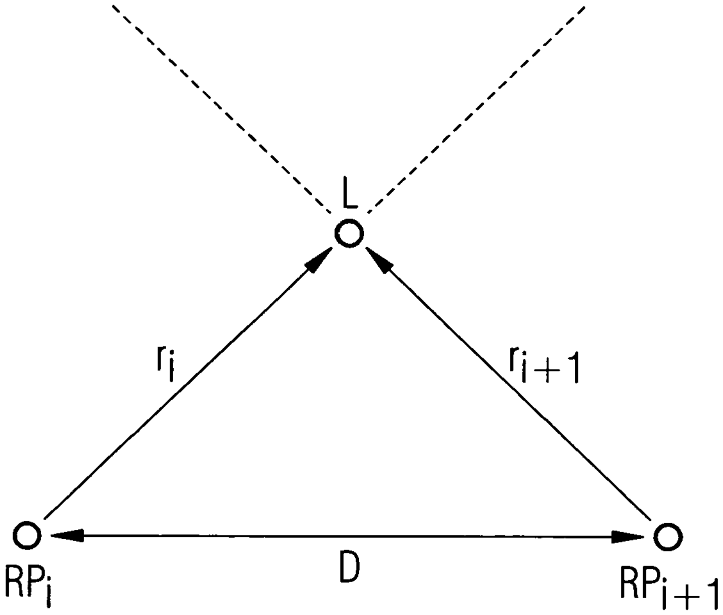
L
$r_i$
$r_{i+1}$
$RP_i$
D
$RP_{i+1}$

FIG 4

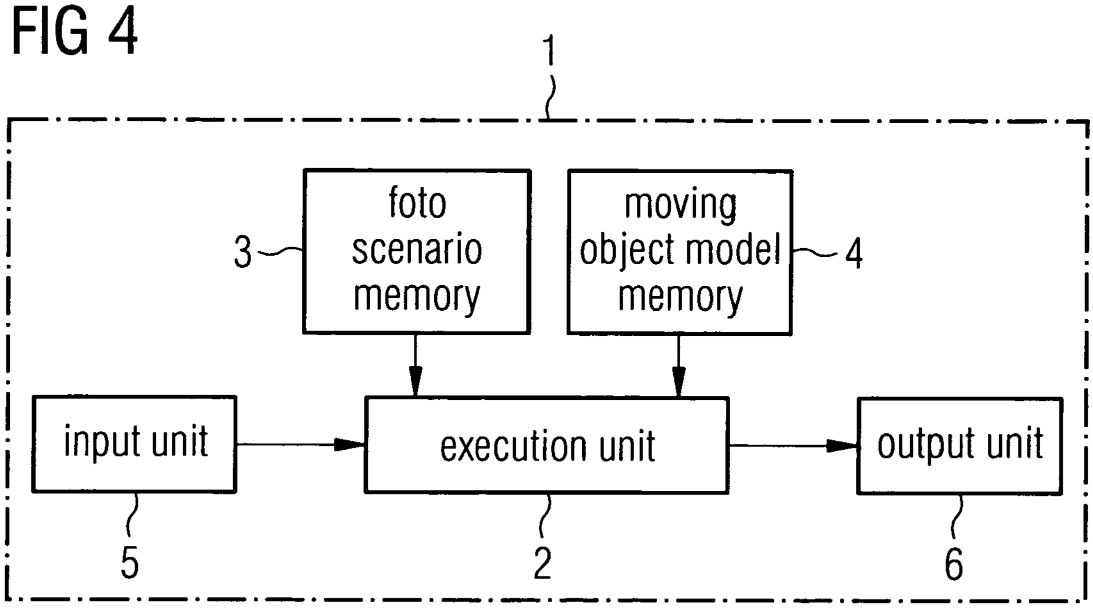
1
foto scenario memory
3
moving object model memory
4
input unit
execution unit
output unit
5
2
6

FIG 5

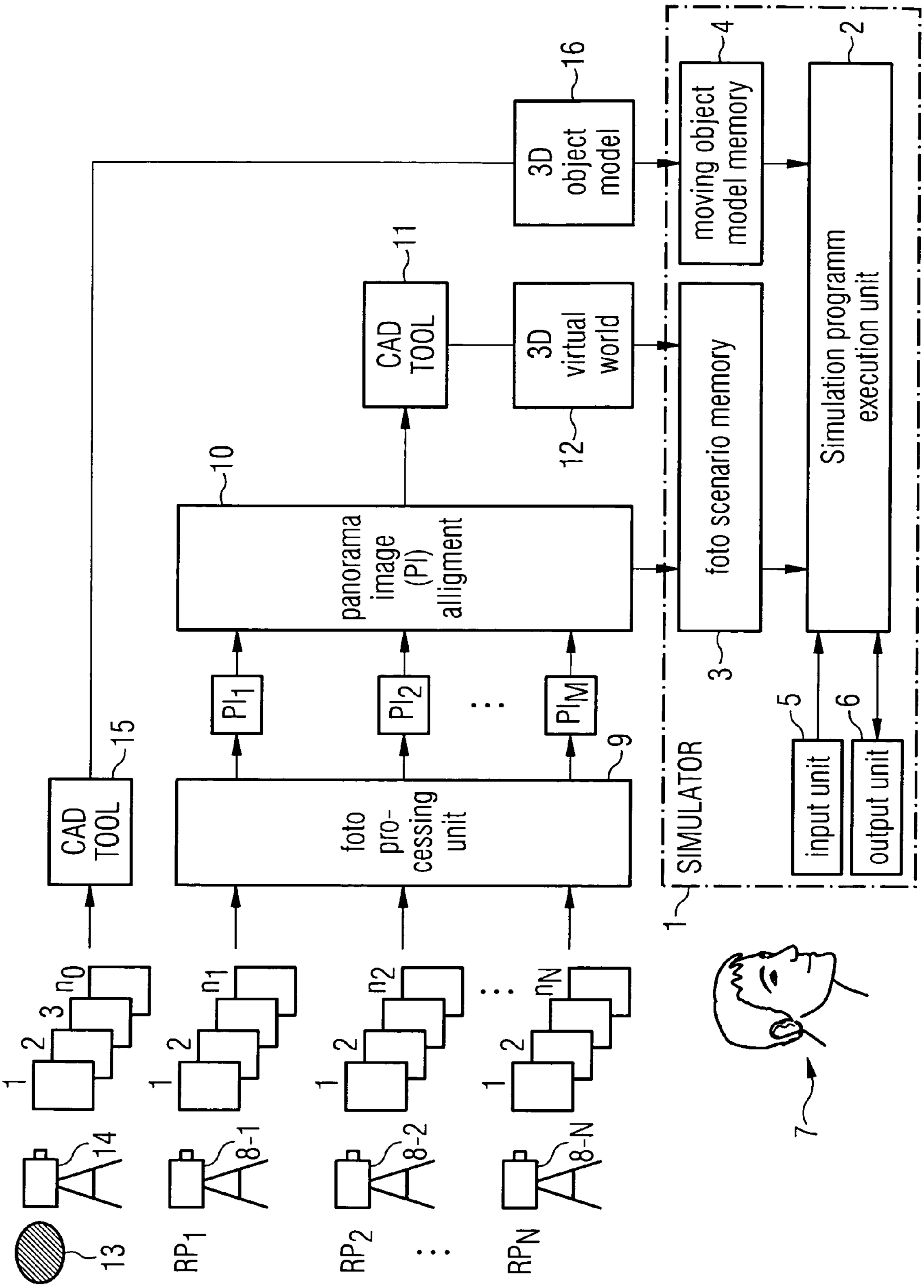
13
14
RP1
8-1
RP2
8-2
RPN
8-N
1
2
3
n0
n1
n2
nN
7
CAD TOOL
15
foto pro-cessing unit
9
PI1
PI2
PIM
panorama image (PI) alligment
10
CAD TOOL
11
3D virtual world
12
3D object model
16
SIMULATOR
1
input unit
5
output unit
6
foto scenario memory
3
moving object model memory
4
Simulation programm execution unit
2

FIG 6

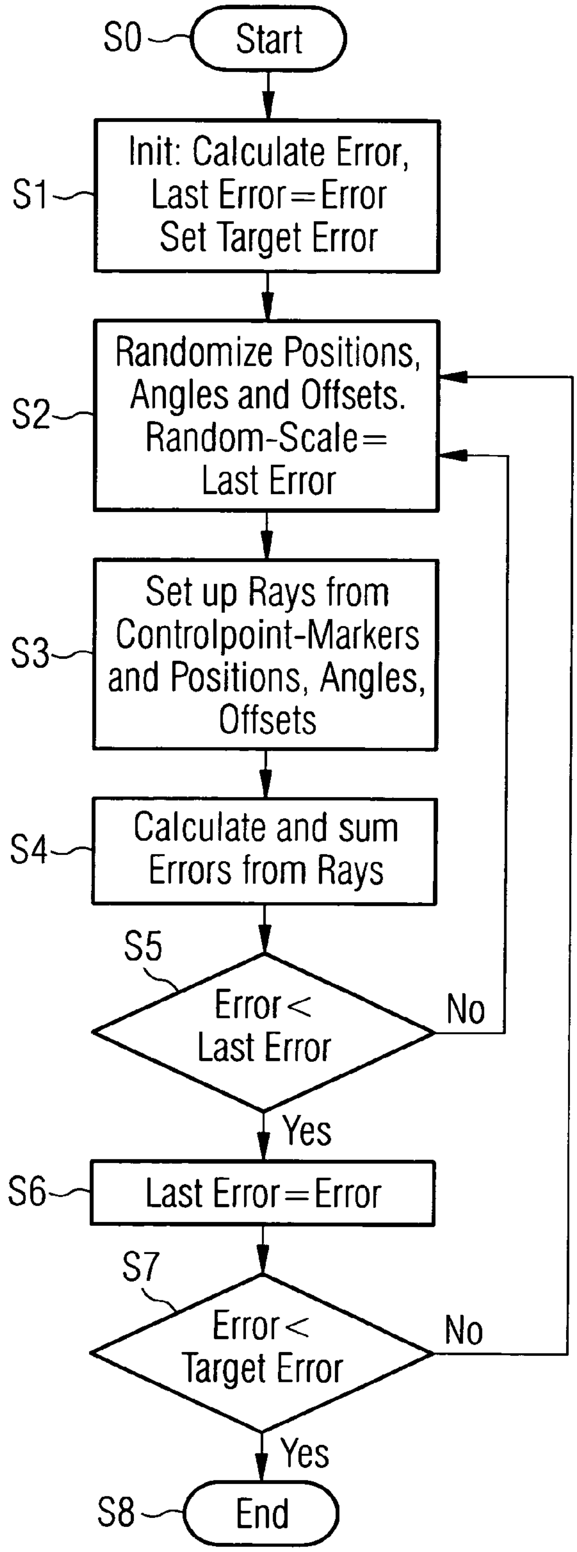
S0
Start
S1
Init: Calculate Error,
Last Error=Error
Set Target Error
S2
Randomize Positions,
Angles and Offsets.
Random-Scale=
Last Error
S3
Set up Rays from
Controlpoint-Markers
and Positions, Angles,
Offsets
S4
Calculate and sum
Errors from Rays
S5
Error<
Last Error
No
Yes
S6
Last Error=Error
S7
Error<
Target Error
No
Yes
S8
End

FIG 7

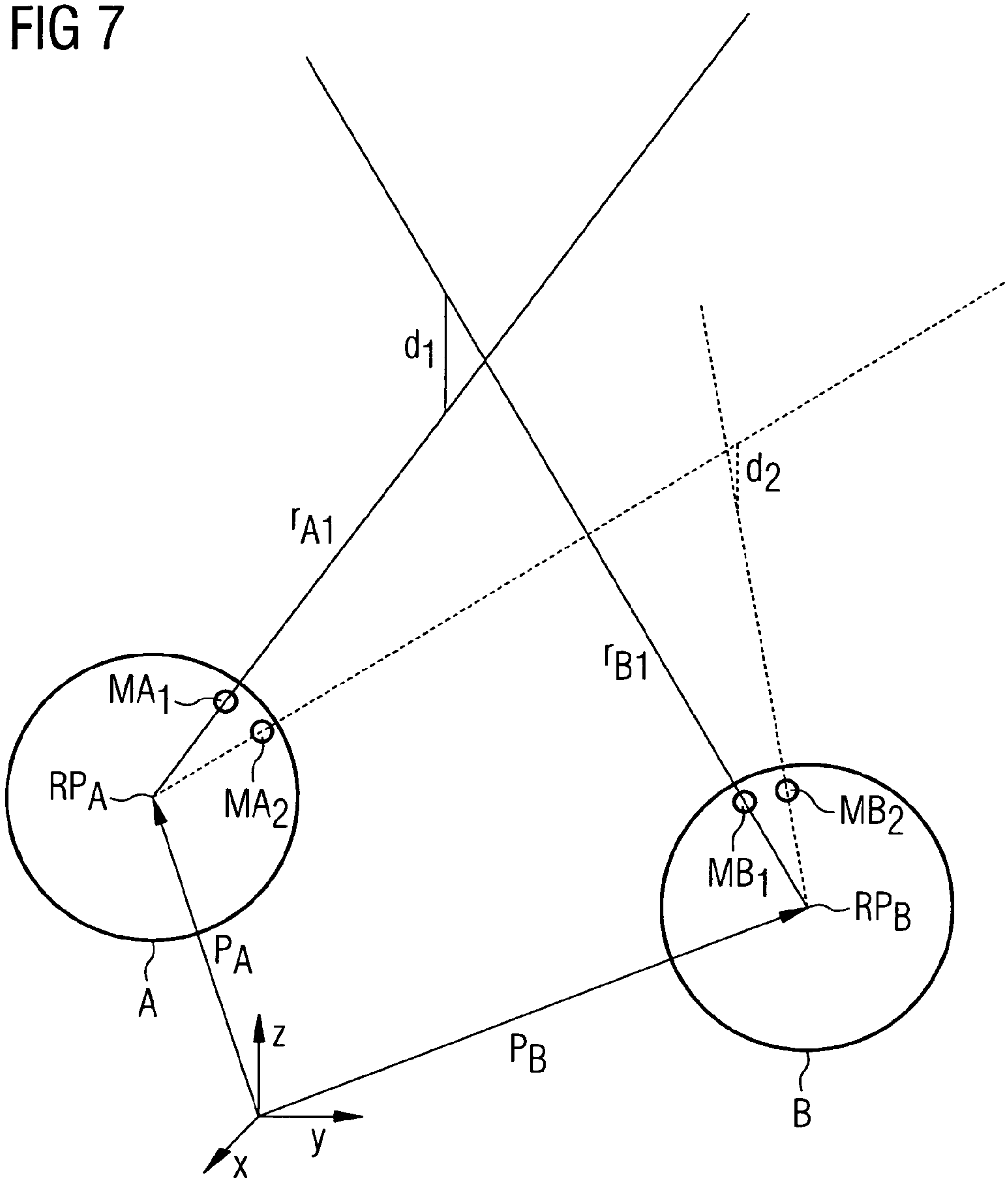

FIG 8

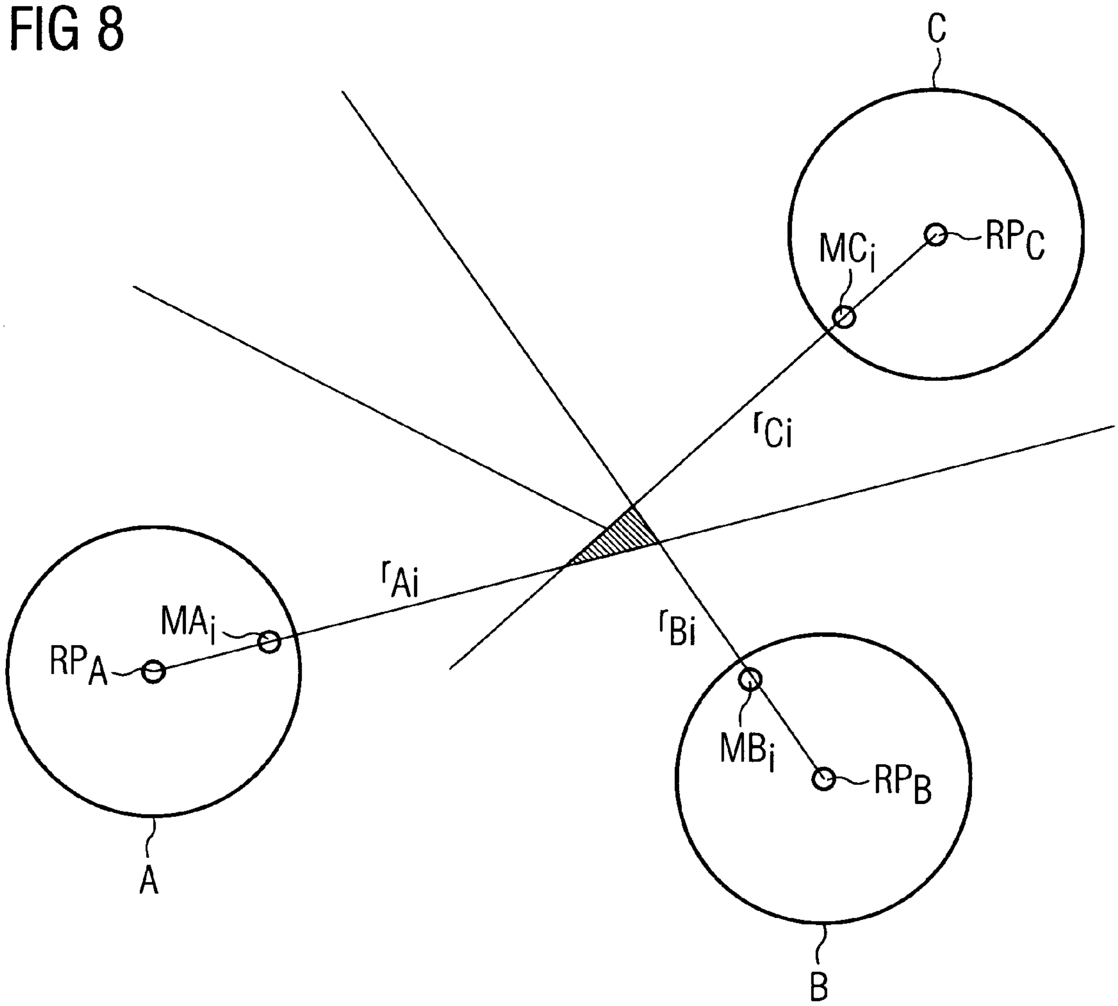

FIG 9

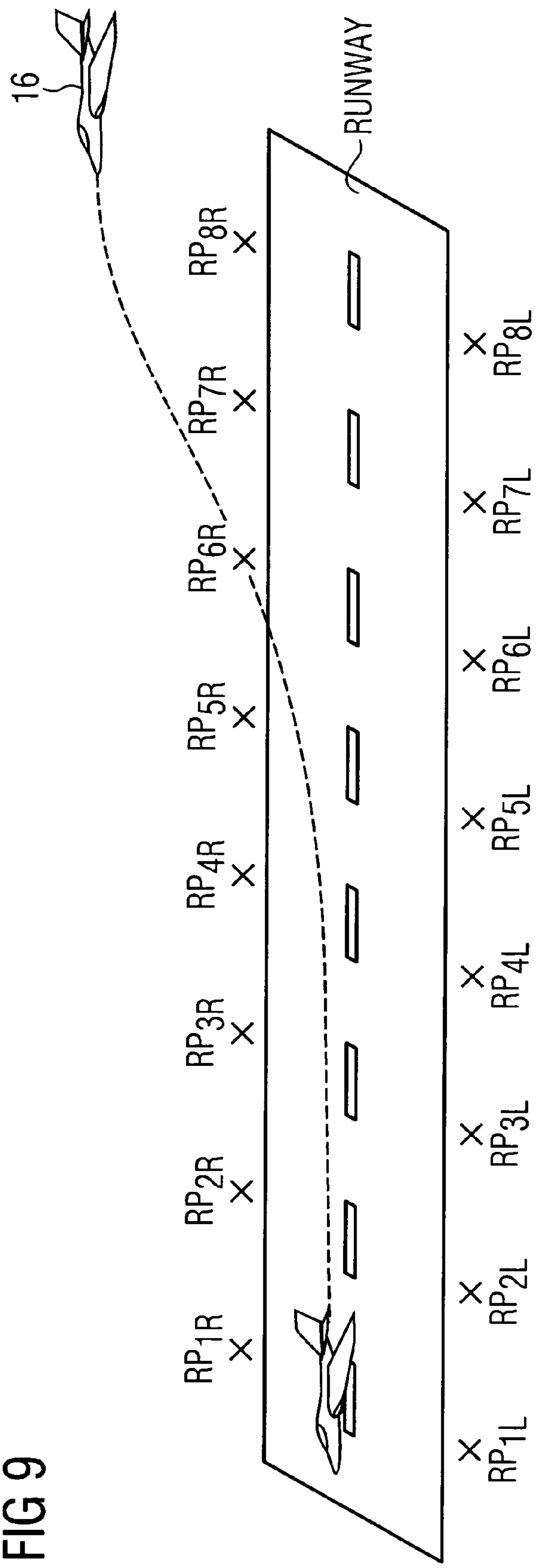
16
RUNWAY
$RP_{1R}$
$RP_{2R}$
$RP_{3R}$
$RP_{4R}$
$RP_{5R}$
$RP_{6R}$
$RP_{7R}$
$RP_{8R}$
$RP_{1L}$
$RP_{2L}$
$RP_{3L}$
$RP_{4L}$
$RP_{5L}$
$RP_{6L}$
$RP_{7L}$
$RP_{8L}$

FIG 10

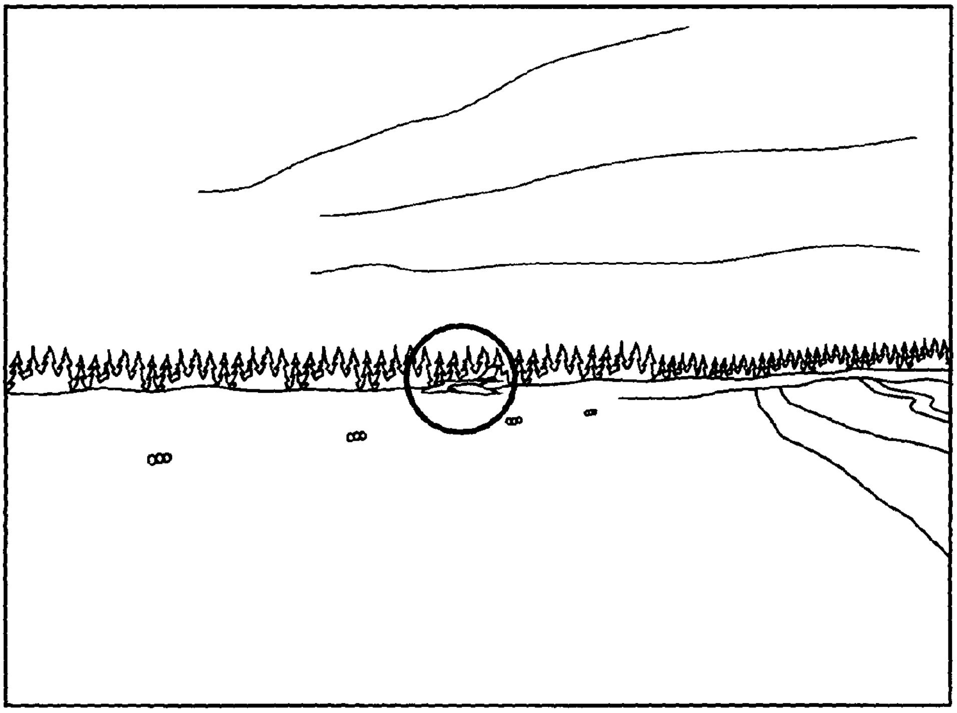

FIG 11

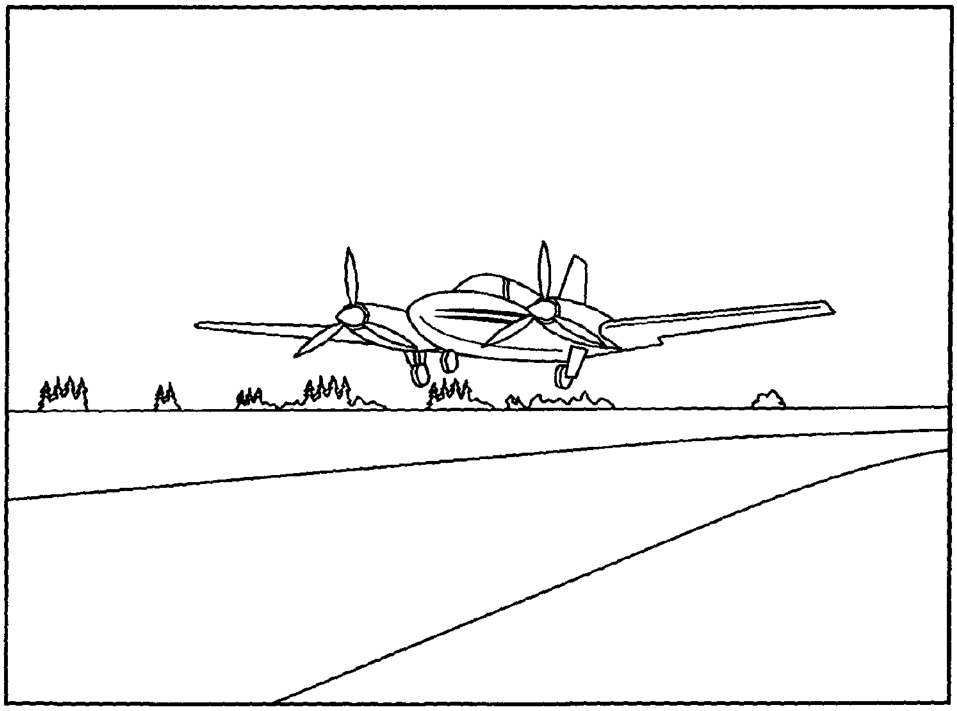

FIG 12

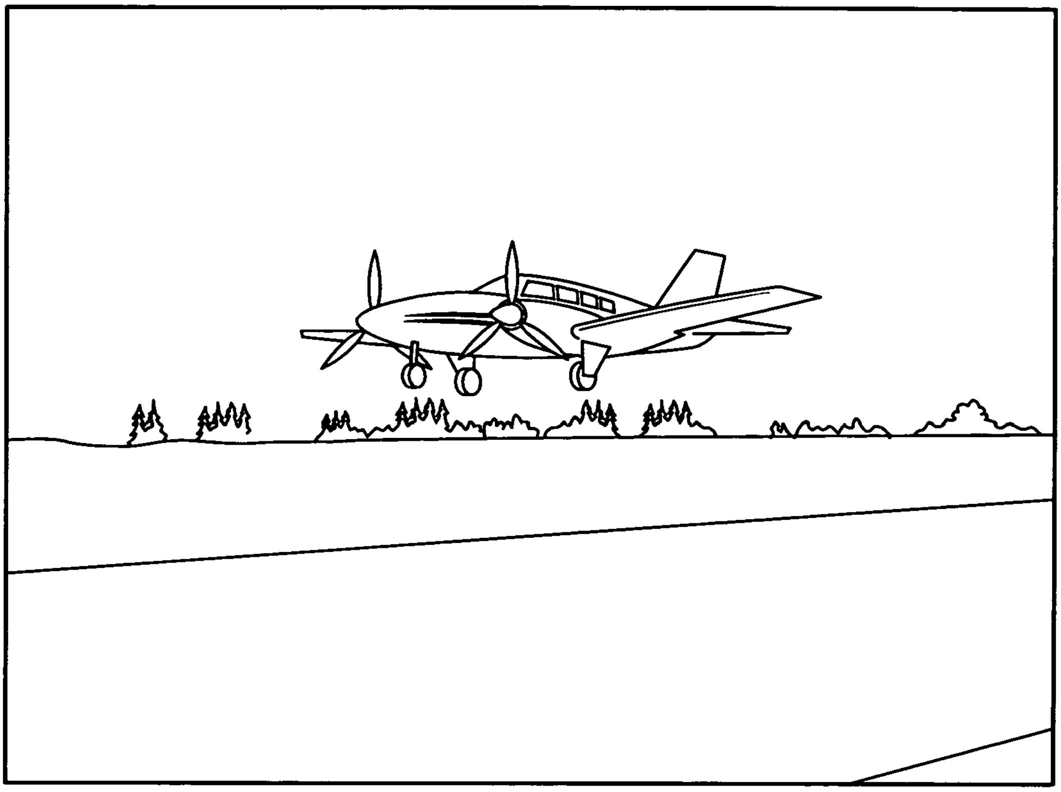

FIG 13

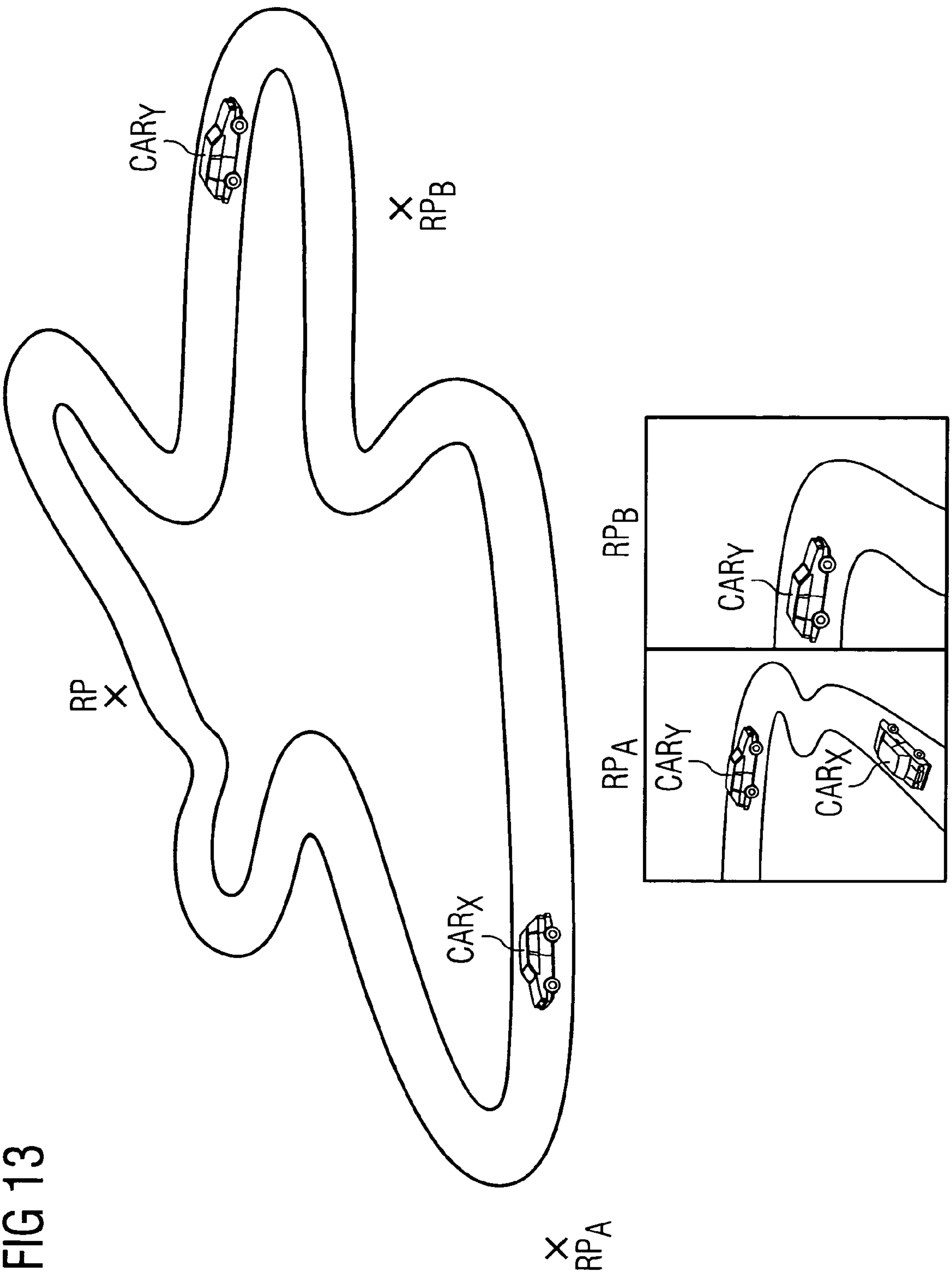

FIG 14

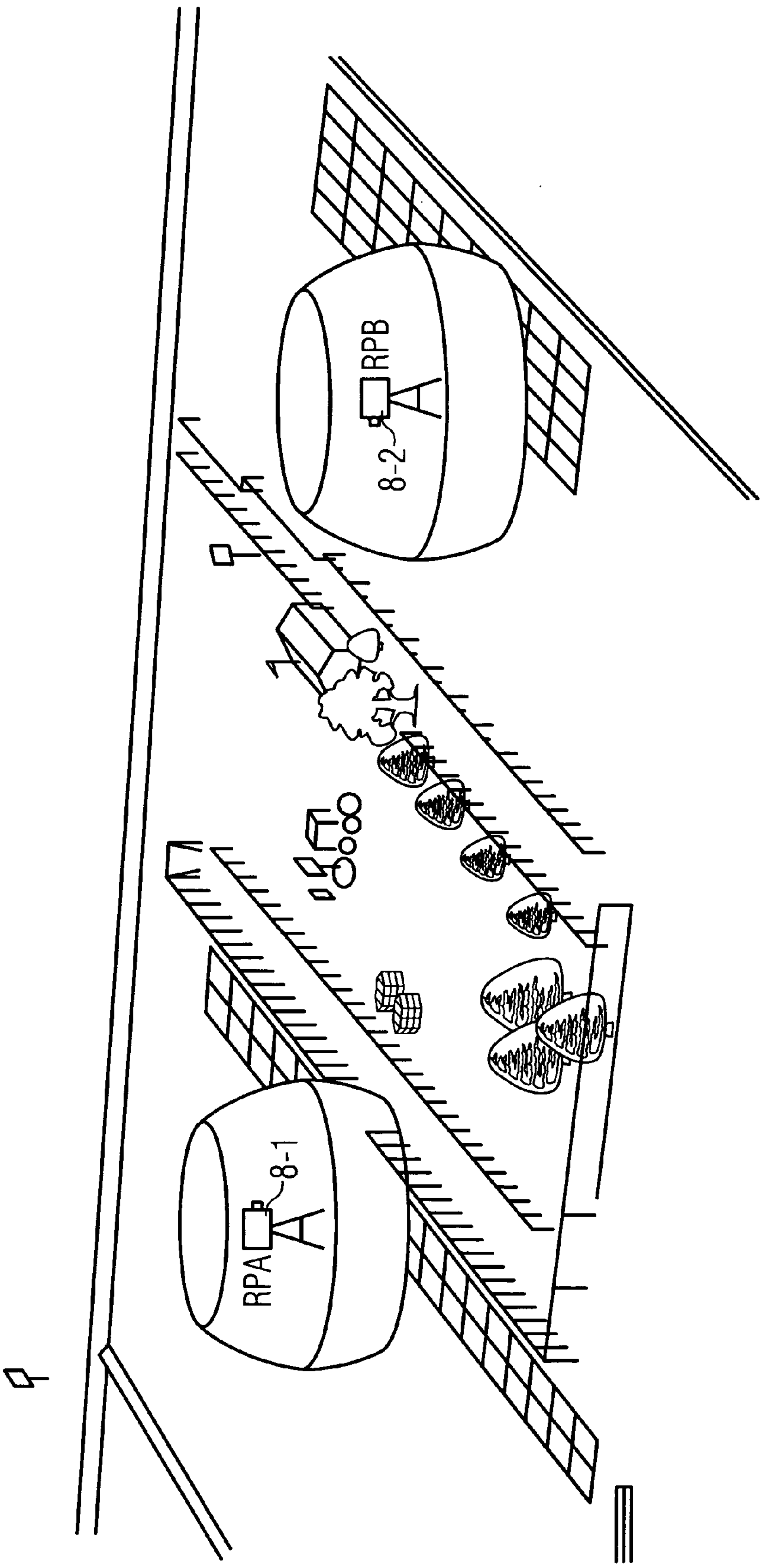

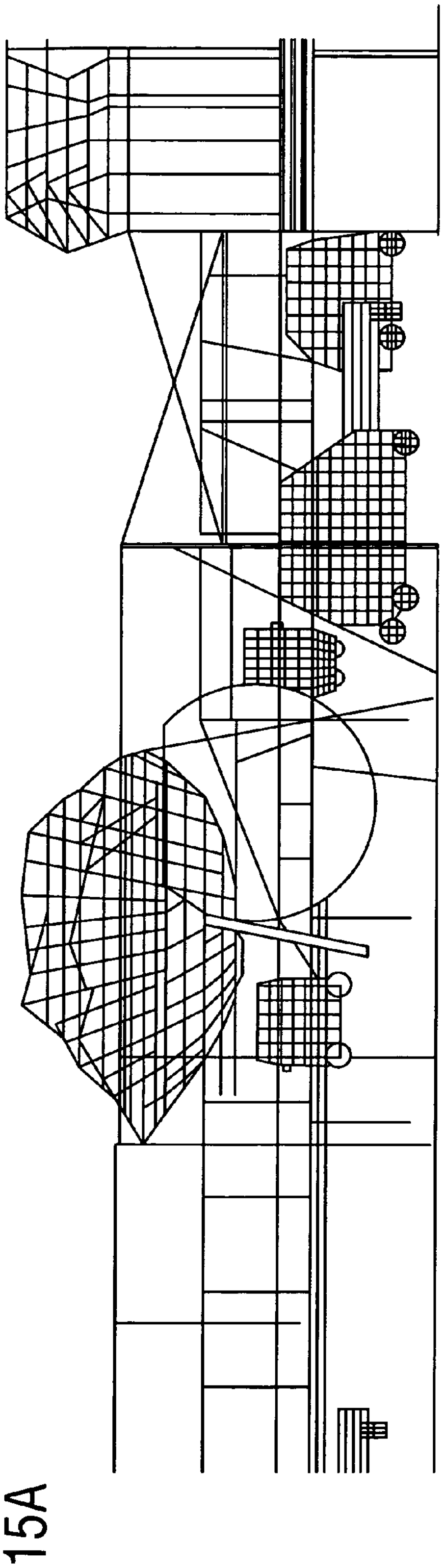

FIG 15A

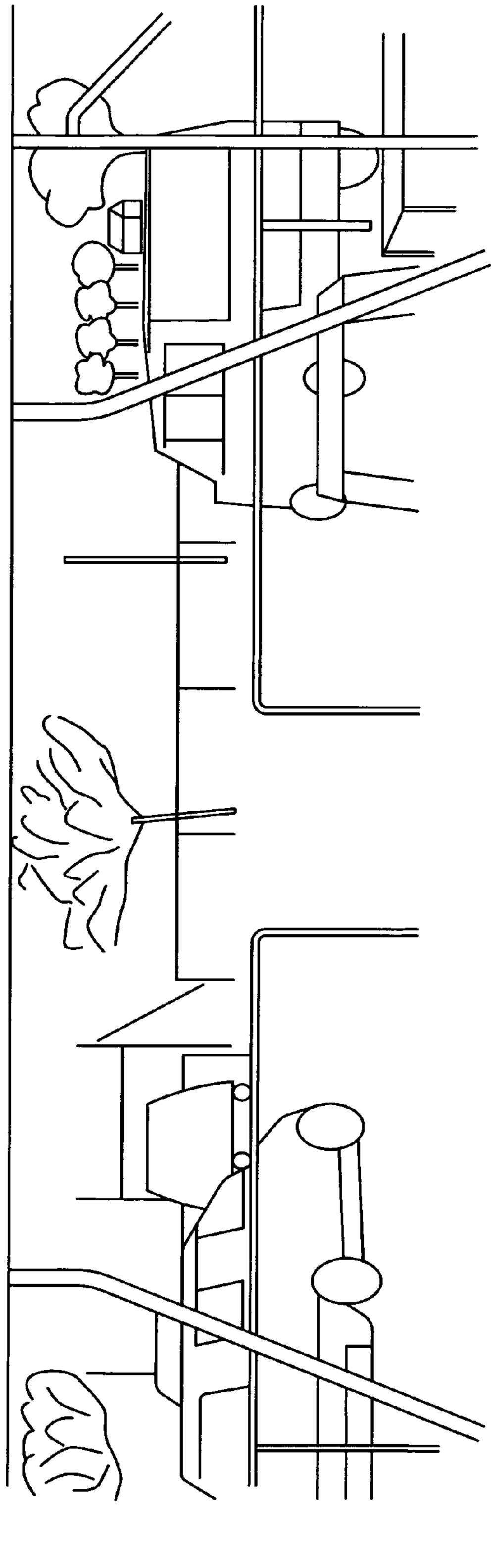

FIG 15B

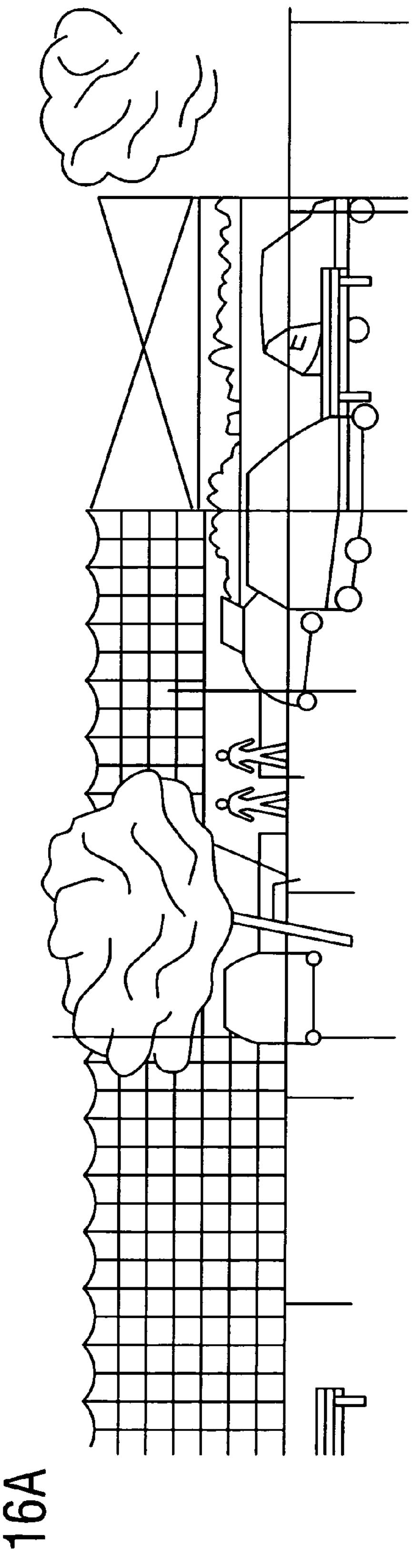

FIG 16A

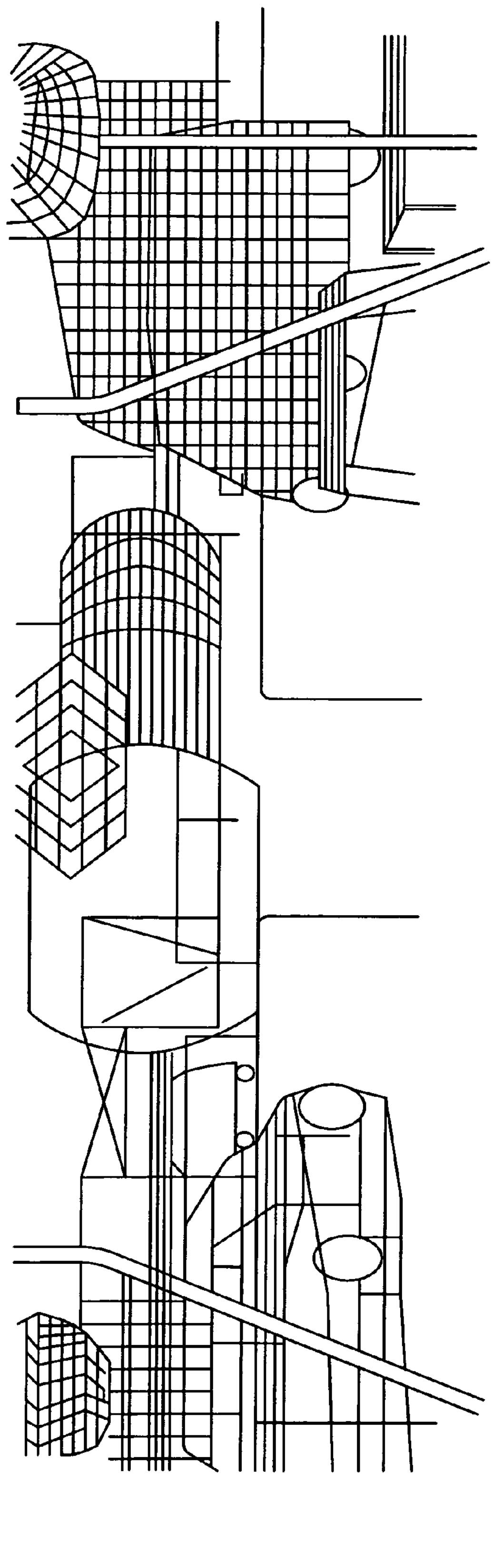

FIG 16B